# EUROPEAN PATENT APPLICATION

(11) **EP 1 314 769 A1**
(43) Date of publication of application: **28.05.2003**
(21) Application number: 02258099.7
(22) Date of filing: 25.11.2002
(51) Int. Cl.: C09J 7/04, C09J 133/08

(54) **Recyclable, transparent adhesive tape**

(30) Priority: 27.11.2001 JP 2001360350
(71) Applicant: LINTEC Corporation, Tokyo 173-0001 (JP)
(72) Inventor: Tetsumoto, Takuya c/o Research Lab. Lintec Corp., Warabi-shi, Saitama 335-0005 (JP); Utagawa, Tetsuyuki c/o Research Lab. Lintec Corp., Warabi-shi, Saitama 335-0005 (JP); Tsukida, Tatsuya c/o Research Lab. Lintec Corp., Warabi-shi, Saitama 335-0005 (JP)
(74) Representative: Wilson Gunn Gee

(57) **Abstract**

A recyclable transparent adhesive tape comprising a transparent paper substrate having water degradability, provided with a release layer on one surface and an adhesive layer having water degradability or alkali degradability on the other surface is disclosed. The adhesive layer comprises 3-5 wt% of a water-soluble plasticizer.

## Description

### FIELD OF THE INVENTION

This invention relates to a transparent adhesive tape which can be recycled, and in particular relates to a recyclable transparent adhesive tape which is suitable for a tape dispenser, can be written on and seen through, can be wound in one layer without separation of a paper substrate and adhesive layer, and is very suitable for recycling.

### BACKGROUND OF THE INVENTION

In the past, cellophane tape has been widely used as an adhesive tape for office use. This tape has excellent transparency, but suffers from the disadvantage that it was not easy to write on. This disadvantage was resolved by an acetate adhesive tape wherein the surface was matt treated so that it could be written on. From the viewpoint of saving energy resources, saving energy and processing waste, more and more products are now being recycled, however neither the aforesaid cellophane tape nor acetate tape could easily be recycled due to their lack of degradability in water or alkali.

This disadvantage was resolved by using glassine paper as the paper substrate of the adhesive tape (Japanese Patent Application Public Disclosure (Kokai) 2000-86986 (Koho)). However, in the manufacture of the glassine paper, a super calendar is applied, so the surface smoothness was high and the paper could hardly be written on by a pencil. If tracing paper is used as the paper substrate, it is much easier to write on the tape with a pencil, but adhesion with the adhesive normally used is poor, and when the tape is wound in a reel, separation of adhesive layer from substrate occurs which prevents the tape from being wound in one layer.

The Inventors carried out intensive studies on transparent adhesive tapes which could be written on, and had excellent recycling properties. As a result, the Inventors discovered that the tape could be wound in one layer even if tracing paper was used as the paper substrate by using a special adhesive, and therefore arrived at the present invention.

It is therefore an object of the present invention to provide an adhesive tape which has good writing properties, transparency and recycling properties, and which can be wound in one layer.

### SUMMARY OF THE INVENTION

The aforesaid object is attained by a tape comprising a transparent paper substrate which has water degradability, provided with a release layer on one surface and an adhesive layer having water degradability or alkali degradability on the other surface, wherein the adhesive layer comprises 3-5 wt% of a water-soluble plasticizer. It is preferred that the transparency of the paper substrate is 50% or more in order to increase the transparency of the adhesive tape, and it is preferred that the surface smoothness is 4,000 seconds or less in order to ensure the tape has good writing properties. It is preferred that the water-soluble plasticizer contained in the adhesive layer is at least one type of polymer chosen from a group comprising cellulose, alcohols and polyol polymers. Further, from the viewpoint of practical strength of the adhesive tape, it is preferred that the weighting of the paper substrate is 30-100 g/m².

### DETAILED DESCRIPTION OF THE INVENTION

The transparent, degradable paper substrate which can be used in this invention means a paper substrate which has not been subjected to lamination by a polyolefin or the like, and which can be recycled into pulp. Specific examples are glassine paper, tracing paper and resin-impregnated paper. For applications which stress transparency, it is preferred that the paper substrate with water degradability has a transparency of 50% or more measured according to JIS P8138. To permit the tape to be written on, it is preferred that the surface smoothness is 4,000 seconds or less, and particularly preferred that it is 500 seconds or less. From the viewpoint of ensuring satisfactory writing properties, tracing paper is particularly preferred, and when anti-dust properties are required such as in a clean room, a resin-impregnated paper must be used. Glassine paper and tracing paper are both highly transparent papers manufactured from paper materials obtained by beating pulp to a high degree, but whereas glassine paper has a high surface smoothness due to the application of a super calendar, tracing paper has a smoothness of only about 30-100 seconds as a super calendar is not used.

The surface smoothness is measured according to JIS P8119.

From the viewpoint of practical strength depending on the application for the adhesive tape, it is preferred that the weighting of the paper substrate is 30-100 g/m².

In the release layer of this invention, a long-chain alkyl group-containing compound, or a universal addition or condensation type silicone release agent, can be used. In this invention, any suitable release agent may be chosen from among these types, but addition type silicone release agent having a high reactivity such as for example SRX-30, SRX-370, BY-24-162, SD-7234 manufactured by Toray-Dow Corning Silicone, or KS-3600, KS-774 or X62-2600 manufactured by Shin-Etsu Chemical Industries Ltd., are preferred.

In this invention, to permit several layers of the adhesive tape to be lap joint adhesion, to allow it to be written on and to make it suitable for tape dispenser release-controlling agent containing a silicone resin such as for example BY24-843, SD-7292, SHR-1404 manufactured by Toray-Dow Corning Silicone, or KS-3800, KS-3600 or X92-183 manufactured by Shin-Etsu Chemical Industries Ltd., should preferably be added to the aforesaid silicone release agent. The amount of this release-controlling agent is preferably 5-80 wt% relative to the silicone release agent. When it is less than 5 wt%, the peeling force is too low, and lap joint adhesion properties, writability and suitability for a tape dispenser are inadequate, which is undesirable. On the other hand, when it exceeds 80 wt%, the hardening properties of the silicone decline and the peeling force away from the adhesive layer is too high, so it is difficult to perform the operation of the rewinding the tape.

It is preferred that a platinum catalyst such as for example SRX-212 manufactured by Toray-Dow Corning Silicone, or FL-56T manufactured by Shin-Etsu Chemical Industries Ltd., is used as a hardening catalyst for the silicone release agent.

This silicone release agent may be dissolved in a single or mixed organic solvent such as for example toluene, n-hexane, cyclohexane or isopropyl alcohol (IPA), applied to the paper substrate and dried. The coating amount after the release layer has dried is preferably 0.05-2.0 g/m², and more preferably 0.1-1.5 g/m². When it is less than 0.05 g/m², uniform peeling from the peeling surface of the tape cannot be obtained, it peels away too much and breaks may appear between layers in places. When it exceeds 2.0 g/m², the hardening properties of the silicone are impaired which is undesirable. There is no particular limitation on the method for coating the release layer on the paper substrate, but coating methods such as the gravure direct method, gravure reverse method and bar method may be used. The drying temperature differs according to the type of silicone coated and the drying apparatus, but it is preferably within the range of 60-150°C.

The adhesive used in the adhesive layer of this invention may be suitably chosen from water degradable or alkali degradable adhesives known in the art, but it is preferred to use an adhesive composition obtained by adding a tertiary amine alcohol having a boiling point of approximately 220°C or higher, in an amount corresponding to 50-120 mole % of the carboxyl groups in a copolymer whereof a water dispersion is obtained by emulsification polymerization of (a) 50-90 wt% of (meth) acrylic acid alkyl ester comprising an alkyl group having 4-12 carbon atoms, (b) 5-45 wt% of an alkoxyalkyl (meth)acrylate, (c) 5-15 wt% of (meth)acrylic acid, and (d) 0-30 wt% of another copolymer monomer in the presence of a basic phosphate. It is also preferred that 5-40 weight parts of a non-ionic surfactant whereof the HLB is 9-18 and 0.2-3 weight parts of a fatty acid soap relative to 100 parts of the copolymer comprising (a)-(d), are further added to the adhesive composition.

Examples of Component (a), i.e., the (meth)acrylic acid alkyl ester comprising an alkyl group having 4-12 carbon atoms, are butyl (meth)acrylate, octyl (meth)acrylate, 2-ethyl hexyl (meth)acrylate, isononyl (meth)acrylate, decyl (meth)acrylate and dodecyl (meth)acrylate. This Component (a) is a component which provides adhesive force and internal cohesive force, and the adhesive must contain at least 50 wt% thereof. Examples of the Component (b), i.e., the alkoxyalkyl (meth)acrylate, are methoxyethyl (meth)acrylate, methoxypropyl (meth)acrylate, ethoxyethyl (meth)acrylate and ethoxypropyl (meth)acrylate. The carboxyl group in Component (c), i.e., (meth)acrylic acid, is neutralized by a tertiary amine alcohol so that it confers water degradability on the adhesive, and at least 5 wt% is required. Examples of Component (d), the other copolymer monomer, are methyl (meth)acrylate, ethyl (meth)acrylate, vinyl acetate, styrene, the caprolactone addition product of (meth)acrylic acid, the ethylene oxide addition product of (meth)acrylic acid, (meth)acrylonitrile and (meth)acrylamide.

When tracing paper is used as the paper substrate in the transparent adhesive tape of this invention, ordinary water-degradable acrylic emulsion adhesives have poor adhesion properties and it is difficult to perform self-back transfer coating. Moreover, the paper substrate is thin, and it is attempted to apply this adhesive directly, curling and wrinkling tend to occur. Therefore, in this invention, in order to improve adhesion between the adhesive and the paper substrate, at least one water-soluble polymer selected from, for example, starch, casein, gelatin, carboxymethyl cellulose, methyl cellulose, polyalkylene glycols such as polyethylene glycol or polypropylene glycol of varying polymerization degree, polyvinyl alcohol, polyacrylamide, polyethyleneimine, sodium polyacrylate, polyvinyl pyyrolidone and polyethylene oxide, is added as a water-soluble plasticizer to the adhesive. The water-soluble polymer plasticizes the adhesive without any adverse effect on degradability, so the adhesion to a paper substrate which conventionally had poor adhesion properties such as tracing paper can be improved. The addition amount of the water-soluble polymer must be 3-5 wt% in the adhesive layer. If it is less than 3 wt%, adhesion properties cannot be improved, and if it exceeds 5 wt%, it causes deterioration of the adhesive with time which is undesirable.

The adhesive may be coated on the paper substrate by the reverse roll method, reverse gravure method, knife method, air knife method or slot die method. The coating amount of the adhesive on the paper substrate is 10-70 g/m², but preferably 25-45 g/m². The adhesive coated on the paper substrate by the above method forms an adhesive layer by drying in the range of 80-120°C.

The transparent adhesive tape of this invention has a release layer on one surface, and an adhesive layer comprising a water-soluble plasticizer in an adhesive having water degradability or alkali degradability on the other surface, of a transparent paper substrate of 30-100 g/m² selected according to the application having water degradability, and it can therefore be wound in one layer without separation of the adhesive layer from the paper substrate. Further, the adhesive tape of this invention can be written on by a pencil although it has good transparency and is excellent for a tape dispenser, so it is particularly useful as an adhesive tape for office use.

In the transparent adhesive tape of this invention, not only the paper substrate but also the adhesive has excellent water degradability and alkali degradability, so the tape can be degraded by water or alkali even when it is affixed to paper or a paper product. Therefore, when the adhesive tape of this invention is used for applications where cellophane tape was conventionally used, it permits recycling of paper and paper products which was difficult in the prior art.

### EXAMPLES

This invention will now be described referring to specific examples, but it should be understood that these examples are not exhaustive. In the following examples and comparative examples, specimens were evaluated as follows.
1) Degradability (recyclability): 3g of the adhesive tape in the Examples and Comparative Examples was affixed to 27g of wood-free paper, cut to 3 cm x 3 cm, and stirred with 1,000 ml water and 0.3g sodium hydroxide for three minutes using a commercial juicer mixer. A handmade sheet was manufactured using 250 ml of the degraded solution, and the size of the adhesive particles re-dispersed in the recycled paper was confirmed by visual observation as follows.
   ○: No residue (no tackiness)
   Δ: 1mm-2mm residue observed (slight tackiness)
   ×: Residue above 2mm (tackiness)
2) Pencil writability: The adhesive tape in the Examples and Comparative Examples was written on with an HB pencil on the surface without the adhesive layer, and the density of the lines was compared with the case where the pencil was used to write on wood-free paper by visual observation.
   ○: Same density as on wood-free paper
   Δ: Slightly fainter
   ×: Almost no coloration
3) One-layer tape treatment: The ease of transfer of the adhesive layer was visually observed when the adhesive tape in the Examples and Comparative Examples was immediately rewound to another roll.
   ○: Good
   ×: Separation of adhesive layer from substrate occurs
4) Time-dependent stability of adhesion properties: The adhesive tape in the Examples and Comparative Examples was left for 1 week in an environment at a temperature of 40°C and relative humidity 80%, and the adhesive force was measured before and after this period.
   ○: More than 60% of ordinary state maintained
   Δ: 20-60% of ordinary state maintained
   ×: Less than 20% of ordinary state maintained

### [Coating solution of release agent]

A coating solution of release agent was prepared by dissolving 93 wt parts of silicone release agent (SRX-370, Toray-Dow Corning Ltd., solids concentration 15 wt%) and 7 wt parts of silicone resin (BY24-843, Toray-Dow Corning Ltd., solids concentration 50 wt%) in toluene, and adding 0.6 wt parts of a platinum catalyst (SRX-212, Toray-Dow Corning Ltd.).

### [Adhesive composition]

33.5 wt parts of 2-ethylhexylacrylate, 33.5 wt parts of butyl acrylate, 8 wt parts of acrylic acid, 20 wt parts of 2-methoxyethylacrylate, 5 parts of vinyl acetate, 140 wt parts of water, 2 wt parts of sodium tripolyphosphate, 0.4 wt parts of ammonium persulphate and 2 wt parts of an anionic surfactant (NewCore 560SF, Nippon Emulsions Ltd.) were reacted by an ordinary emulsion polymerization, and a copolymer aqueous dispersion having viscosity 300 centipoise, non-volatile matter 42.3 wt%, pH 3.1 and particle diameter 0.65 micrometers was obtained.

Next, an equivalent of carboxyl group in this copolymer aqueous dispersion was neutralized by an equivalent amount of potassium hydroxide, then 20 wt parts of a 15 wt% aqueous solution of sodium tripolyphosphate and 10 wt parts of a non-ionic surfactant (Nonion NS-210, Nippon Oils and Fats Ltd.) of HLB 13.3, were added. Subsequently, 5 wt parts of thickener (Boncoat 3750, Dai Nippon Ink Ltd.) was added to manufacture the adhesive composition of this invention.

### EXAMPLE 1

A release layer was formed by applying the aforesaid coating solution of release agent to one surface of a tracing paper (Chartham Ltd., weighting 53 g/m², transparency 80%) as paper substrate, to 1.0 g/m² in terms of solids, by the gravure direct coating method, and then drying at 150°C for 20 seconds. The smoothness of this paper substrate was 45 seconds and its transparency was 83%. Next, a product obtained by adding 3 wt parts of polyethylene glycol (molecular weight: 300) as plasticizer to 100 wt parts of the aforesaid adhesive composition, was applied by knife coating method to 35 g/m² in terms of solids, and dried at 100°C for 1 minute to give an adhesive tape.

### EXAMPLE 2

An adhesive tape was manufactured in an identical manner to that of Example 1, except that the product of adding 3 wt parts of poly propylene glycol (molecular weight: 400) as plasticizer to an adhesive identical to that used in Example 1, was coated and dried to 35 g/m² in terms of solids.

### EXAMPLE 3

An adhesive tape was manufactured in an identical manner to that of Example 1, except that the product of adding 3 wt parts of polyvinyl alcohol (molecular weight: 500, saponification degree: 88.5%) as plasticizer to an adhesive identical to that used in Example 1, was coated and dried to 35 g/m² in terms of solids.

### EXAMPLE 4

An adhesive tape was manufactured in an identical manner to that of Example 1, except that the product of adding 3 wt parts of Sorbitol "Nikken" (Nikken Kagaku Ltd.) as plasticizer to an adhesive identical to that used in Example 1, was coated and dried to 35 g/m² in terms of solids.

### COMPARATIVE EXAMPLE 1

An adhesive tape was manufactured in an identical manner to that of Example 1, except that the aforesaid adhesive composition was used without using a water-soluble plasticizer.

### Comparison Sample 1

An adhesive tape was manufactured in an identical manner to that of Example 1, except that a cellophane film of thickness 40 micrometers was used.

### Comparison Sample 2

An adhesive tape was manufactured in an identical manner to that of Example 1, except that an acetate film of thickness 40 micrometers with a matt surface was used.

The results of degradability, pencil writability, one layer tape treatment and time-dependent stability of adhesion properties for Examples 1-4, Comparative Example 1 and Comparison Samples 1 and 2, are shown in Table 1.

**Table 1**

| | Degradability (Recyclability) | Pencil writability | One layer tape treatment | Time-dependent stability of adhesion properties |
|---|---|---|---|---|
| Example 1 | ○ | ○ | ○ | ○ |
| Example 2 | ○ | ○ | ○ | ○ |
| Example 3 | ○ | ○ | ○ | ○ |
| Example 4 | ○ | ○ | ○ | Δ |
| Comparative Example 1 | ○ | ○ | × | ○ |
| Comparison Sample 1 | × | × | ○ | ○ |
| Comparison Sample 2 | × | ○ | ○ | ○ |

From the results in Table 1, it is seen that the adhesive tape of this invention has good adhesion between the paper substrate and adhesive layer, so it can be wound in one layer without separation. In addition, it has excellent suitability for a tape dispenser, writability and transparency, is suitable for recycling by degrading with water or alkali, and does not involve much effort for recovery.

## Claims

1. A recyclable transparent adhesive tape comprising a paper substrate which is transparent and has water degradability, provided with a release layer on one surface and an adhesive layer having water degradability or alkali degradability on the other surface, wherein the adhesive layer comprises 3-5 wt% of a water-soluble plasticizer.

2. The recyclable transparent adhesive tape according to Claim 1, wherein the transparency of the paper substrate is 50% or more.

3. The recyclable transparent adhesive tape according to Claim 1 or 2, wherein the surface smoothness of the paper substrate is 4,000 seconds or less.

4. The recyclable transparent adhesive tape according to any of Claims 1 to 3, wherein the water-soluble plasticizer is at least one type of polymer chosen from a group comprising cellulose, alcohols and polyol polymers.

5. The recyclable transparent adhesive tape according to any of Claims 1 to 4, wherein the weighting of the paper substrate is 30-100 g/m².
